# EUROPEAN PATENT SPECIFICATION

(11) **EP 3 370 003 B1**
(45) Date of publication and mention of the grant of the patent: **05.10.2022**
(21) Application number: 15907267.7
(22) Date of filing: 29.10.2015
(51) Int. Cl.: F24F 7/08, F24F 11/81

(54) **HEAT EXCHANGE VENTILATION DEVICE**
WÄRMEAUSTAUSCHBELÜFTUNGSVORRICHTUNG
DISPOSITIF DE VENTILATION À ÉCHANGE DE CHALEUR

(43) Date of publication of application: 05.09.2018
(73) Proprietor: Mitsubishi Electric Corporation, Chiyoda-ku Tokyo 100-8310 (JP)
(72) Inventor: SHIOMI, Shinsuke, Tokyo 102-0073 (JP)
(74) Representative: Pfenning, Meinig & Partner mbB
(86) International application number: PCT/JP2015/080500
(87) International publication number: WO 2017/072903

(56) References cited:
- JP-A- H04 131 656
- JP-A- H04 161 742
- JP-A- 2006 125 825
- JP-A- 2008 298 384
- JP-A- 2009 109 118
- JP-A- 2010 281 522

## Description

### Field

The present invention relates to a heat exchange ventilation device having a discharge air passage, a supply air passage, a heat exchanger, a bypass air passage and an air passage switching device.

### Background

Air-passage switching type heat exchange ventilation devices have been developed recently. This type of ventilation device performs air conditioning by switching between heat exchange ventilation and normal ventilation. The heat exchange ventilation is intended to ventilate a room while performing heat exchange between outside air and indoor air through a heat exchange element. The normal ventilation is intended to ventilate a room without performing the heat exchange through a heat exchange element. The air-passage switching type heat exchange ventilation devices often include a supply airflow passage through which outside air is drawn and blown out into a room via a heat exchange element, a discharge airflow passage through which indoor air is drawn and discharged to the outside via the heat exchange element, and a bypass airflow passage through which indoor air is drawn, bypasses the heat exchange element, and is discharged to the outside.

The bypass airflow passage branches off from the discharge airflow passage on the upstream side of the heat exchange element and an air passage switching device is provided at the branch portion. When the heat exchange ventilation device performs heat exchange ventilation, the bypass airflow passage is closed by the air passage switching device while the discharge airflow passage is opened. Thus, outside air drawn into the supply airflow passage, and indoor air drawn into the discharge airflow passage flow via the heat exchange element, and thereby heat exchange between the outside air and the indoor air is performed through the heat exchange element.

When the heat exchange ventilation device performs a normal ventilation operation, the discharge airflow passage is closed by the air passage switching device while the bypass airflow passage is opened. Indoor air drawn into the bypass airflow passage bypasses the heat exchange element, and is discharged to the outside. Thus, heat exchange between the outside air and the indoor air does not substantially occur.

Air passage switching devices have been developed as disclosed in Patent Literature 1 in order to reduce the noise level of a heat exchange ventilation device, to improve its reliability, or to reduce its power cost.

A return-air inlet port of the heat exchange ventilation device is located on a side surface of a casing, and is often positioned side by side with a supply-air outlet port or an outside-air inlet port. It is desirable for a ceiling-mounted heat exchange ventilation device to reduce the height dimension of a product in order to accommodate the product in the ceiling plenum.

In conventional heat exchange ventilation devices, an outlet port and an inlet port are in the shape of a circular duct or a square duct. Thus, it is sufficient that the air passage switching device disclosed in Patent Literature 1 is sized equal to the size of the opening of the outlet port or the inlet port.

Moreover, the following documents represent related prior art:Document JP 2009 109118 A relates to a humidity control apparatus that adjusts the humidity of air using an adsorbent.

Document JP H04 161742 A provides a ventilator having a heat exchange function such that dew condensation and freezing in the heat exchanger can be prevented.

Document JP 2006 125825 A proposes a ventilator capable of performing humidification of room air only by circulation of room air without introducing outside air.

Document JP H04 131656 provides a simple and reliable interlocking mechanism for rotating members in an air conditioner.

### Citation List

### Patent Literature 1

Japanese Patent No. 4860000

### Summary

### Technical Problem

Heat exchange ventilation devices have been required to make an outlet port and an inlet port with a rectangular duct to obtain a product with a high air capacity while reducing the height dimension of the product. The air passage switching device disclosed in Patent Literature 1 switches between the air passages by using only a single air-passage switching plate. Thus, when this air passage switching device is applied to a heat exchange ventilation device with a rectangular duct at an inlet port, this results in a problem with an increase in the size and a more complicated structure of the air passage switching device.

The present invention has been achieved to solve the above problems, and an object of the present invention is to provide a heat exchange ventilation device with a rectangular duct at an interior-side inlet port while being prevented from increasing in the size and from having a more complicated structure.

### Solution to Problem

In order to solve the above problems and achieve the object, the present invention is a heat exchange ventilation device as defined in claim 1. This device comprises a casing including a discharge air passage branched into a first discharge air passage and a second discharge air passage, a supply air passage, and a heat exchanger disposed between the supply air passage and the discharge air passage, and a bypass air passage for bypassing the heat exchanger, said bypass air passage being branched into a first bypass air passage and a second bypass air passage, wherein the first bypass air passage is branching off from the first discharge air passage and the second bypass air passage is branching off from the second discharge air passage, and a supply air passage, and a heat exchanger disposed between the supply air passage and the discharge air passage; an air passage switching device to switch between the discharge air passage and the bypass air passage in the heat exchange ventilation device through which airflow passes, the air passage switching device comprising a first air-passage switching unit including a first air passage switching plate that opens and closes the first discharge air passage and a second air passage switching plate that opens and closes the first bypass air passage as first air-passage switching members, each of which has a rotational shaft extending in a direction parallel to a bottom surface of the heat exchange ventilation device and the first air passage switching plate and the second air passage switching plate rotationally move in conjunction with each other, and a second air-passage switching unit including a third air passage switching plate that opens and closes the second discharge air passage as a second air-passage switching member having a rotational shaft extending in a direction perpendicular to the bottom surface of the heat exchange ventilation device and the third air passage switching plate rotates independently from the first and second air-passage switching plates and when the third air passage switching plate opens the second discharge air passage the second bypass air passage is closed and when the third air passage switching plate closes the second discharge air passage the second bypass air passage is opened. The air passage switching device switches between the discharge air passage and the bypass air passage to which air drawn into the heat exchange ventilation device from a room is directed, in accordance with a rotational position of the first, second and third air-passage switching plates.

### Advantageous Effects of Invention

The heat exchange ventilation device of the present invention has an effect of being applicable to a heat exchange ventilation device with a rectangular duct at an interior-side inlet port while being prevented from increasing in the size and from having a more complicated structure.

### Brief Description of Drawings

FIG. 1 is a perspective view illustrating a heat exchange ventilation device according to an embodiment of the present invention during heat exchange ventilation.
FIG. 2 is a side view illustrating the heat exchange ventilation device according to the present embodiment during heat exchange ventilation.
FIG. 3 is a perspective view illustrating the heat exchange ventilation device according to the present embodiment during normal ventilation.
FIG. 4 is a side view illustrating the heat exchange ventilation device according to the present embodiment during normal ventilation.
FIG. 5 is a perspective view of an air passage switching device included in the heat exchange ventilation device according to the present embodiment during heat exchange ventilation.
FIG. 6 is a side view of the air passage switching device included in the heat exchange ventilation device according to the present embodiment during heat exchange ventilation.
FIG. 7 is a perspective view of the air passage switching device included in the heat exchange ventilation device according to the present embodiment during normal ventilation.
FIG. 8 is a side view of the air passage switching device included in the heat exchange ventilation device according to the present embodiment during normal ventilation.
FIG. 9 is a perspective view of a second air-passage switching unit of the air passage switching device included in the heat exchange ventilation device according to the present embodiment during heat exchange ventilation.
FIG. 10 is a side view of the second air-passage switching unit of the air passage switching device included in the heat exchange ventilation device according to the present embodiment during heat exchange ventilation.
FIG. 11 is a perspective view of the second air-passage switching unit of the air passage switching device included in the heat exchange ventilation device according to the present embodiment during normal ventilation.
FIG. 12 is a side view of the second air-passage switching unit of the air passage switching device included in the heat exchange ventilation device according to the present embodiment during normal ventilation.

### Description of Embodiments

A heat exchange ventilation device according to an embodiment of the present invention will be described in detail below with reference to the accompanying drawings. The present invention is not limited to the described embodiment but is defined by the appended claims.

### Embodiment.

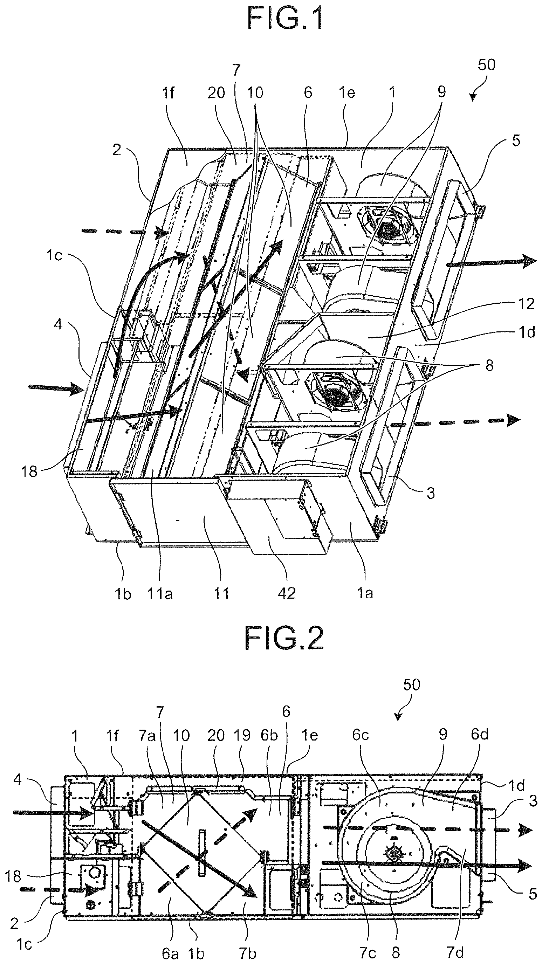

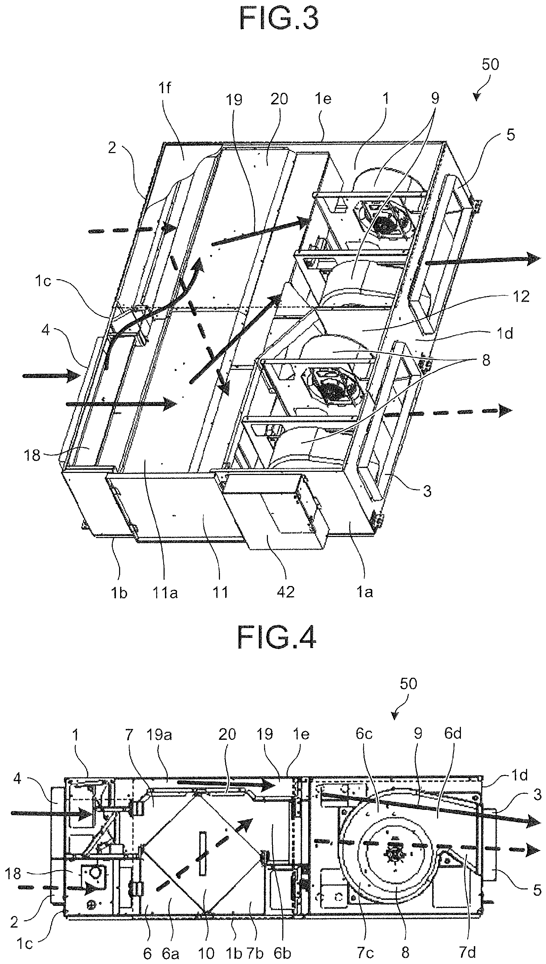

FIG. 1 is a perspective view illustrating a heat exchange ventilation device according to an embodiment of the present invention during heat exchange ventilation. FIG. 2 is a side view illustrating the heat exchange ventilation device according to the present embodiment during heat exchange ventilation. FIG. 3 is a perspective view illustrating the heat exchange ventilation device according to the present embodiment during normal ventilation. FIG. 4 is a side view illustrating the heat exchange ventilation device according to the present embodiment during normal ventilation. In FIGS. 1 and 3, the top surface of a casing 1 is partially cut out to make the interior of the casing 1 visible. In FIGS. 2 and 4, an interior-side lateral surface 1a of the casing 1 is partially cut out to make the interior of the casing 1 visible. FIG. 1 illustrates a bypass air-passage partition component 20 in a transparent manner to show the interior of a heat exchange ventilation device 50. The dotted-line arrows in FIGS. 1 to 4 illustrate supply airflow. The solid-line arrows in FIGS. 1 and 2 illustrate discharge airflow. The solid-line arrows in FIGS. 3 and 4 illustrate bypass airflow.

The casing 1 that constitutes the outline of the heat exchange ventilation device 50 is a cuboid including the interior-side lateral surface 1a, a bottom surface 1b, an inlet-side lateral surface 1c, an outlet-side lateral surface 1d, an exterior-side lateral surface 1e, and a top surface If. Openings are formed on the inlet-side lateral surface 1c and the outlet-side lateral surface 1d. The openings formed on the inlet-side lateral surface 1c serve as an exterior-side inlet port 2 and an interior-side inlet port 4, respectively. The openings formed on the outlet-side lateral surface 1d serve as an interior-side outlet port 3 and an exterior-side outlet port 5, respectively.

In the casing 1, a supply air passage 6 and a discharge air passage 7 are formed. The supply air passage 6 communicates the exterior-side inlet port 2 with the interior-side outlet port 3 to supply outside air to a room. The discharge air passage 7 is a first airflow passage that communicates the interior-side inlet port 4 with the exterior-side outlet port 5 to discharge indoor air to the outside. In the casing 1, there are disposed a heat exchanger 10 that performs heat exchange between supply airflow passing through the supply air passage 6 and discharge airflow passing through the discharge air passage 7, a supply-air blower unit 8 that generates supply airflow, a discharge-air blower unit 9 that generates discharge airflow, and an air passage switching device 18 that switches discharge airflow between passing through the heat exchanger 10 and bypassing the heat exchanger 10. The supply air passage 6 and the discharge air passage 7 are independently provided throughout the entire path. The heat exchanger 10 is disposed closer to the inlet-side lateral surface 1c with respect to the center of the casing 1, and extends across the supply air passage 6 and the discharge air passage 7.

In the casing 1, a bypass air passage 19 that branches off from the discharge air passage 7 and that bypasses the heat exchanger 10 is provided. The bypass air passage 19 is a second airflow passage that branches off from the discharge air passage 7 that is the first airflow passage.

The air passage switching device 18 is disposed closer to the inlet-side lateral surface 1c with respect to the center of the casing 1.

The supply-air blower unit 8 and the discharge-air blower unit 9 are disposed closer to the outlet-side lateral surface 1d with respect to the center of the casing 1. The supply-air blower unit 8 is disposed closer to the interior-side lateral surface 1a with respect to the center of the casing 1. The discharge-air blower unit 9 is disposed closer to the exterior-side lateral surface 1e with respect to the center of the casing 1. The supply-air blower unit 8 and the discharge-air blower unit 9 are positioned on the secondary side of the heat exchanger 10. The supply-air blower unit 8 and the discharge-air blower unit 9 are independent from each other. An air-passage partition component 12 separates these two blower units from each other in such a manner that the supply air passage 6 and the discharge air passage 7 do not cross each other.

On the supply air passage 6, the supply-air blower unit 8 is provided on the secondary side of the heat exchanger 10. Supply airflow that passes through the supply air passage 6 flows from the exterior-side inlet port 2 into the casing 1. This airflow passes through a pre-heat-exchanger supply air passage 6a, which is positioned on the lower left side of the heat exchanger 10 when viewed from the interior-side lateral surface 1a, and passes through a post-heat-exchanger supply air passage 6b, which is positioned on the upper right side of the heat exchanger 10 when viewed from the interior-side lateral surface 1a. The airflow is then blown out toward a room from the interior-side outlet port 3, provided on the outlet-side lateral surface 1d, via a pre-supply-air-blower unit supply air passage 6c, and a post-supply-air-blower-unit supply air passage 6d.

On the discharge air passage 7, the discharge-air blower unit 9 is provided on the secondary side of the heat exchanger 10. Discharge airflow that passes through the discharge air passage 7 flows from the interior-side inlet port 4 into the casing 1. This airflow passes through a pre-heat-exchanger discharge air passage 7a, which is positioned on the upper left side of the heat exchanger 10 when viewed from the interior-side lateral surface 1a, and passes through a post-heat-exchanger discharge air passage 7b, which is positioned on the lower right side of the heat exchanger 10 when viewed from the interior-side lateral surface 1a. The airflow is then discharged to the outside from the exterior-side outlet port 5, provided on the outlet-side lateral surface 1d, via a pre-discharge-air blower unit discharge air passage 7c, and a post discharge-air-blower-unit discharge air passage 7d.

The supply airflow passes through the heat exchanger 10 from the lower left side toward the upper right side of the heat exchanger 10 when viewed from the interior-side lateral surface 1a. The discharge airflow passes through the heat exchanger 10 from the upper left side toward the lower right side of the heat exchanger 10 when viewed from the interior-side lateral surface 1a. The supply airflow and the discharge airflow cross each other in the heat exchanger 10, and thereby heat exchange is performed through a partition wall included in the heat exchanger 10.

Bypass airflow that passes through the bypass air passage 19 is generated when the discharge-air blower unit 9 is operated, and flows from the interior-side inlet port 4 into the casing 1. This bypass airflow passes through the air passage switching device 18, and then passes above the heat exchanger 10 through a bypass air passage 19a above the heat exchanger, which is interposed between the bypass air-passage partition component 20 and the top surface If. The bypass airflow is then discharged to the outside from the exterior-side outlet port 5 via the pre-discharge-air blower unit discharge air passage 7c, and the post-discharge-air-blower-unit discharge air passage 7d.

On the interior-side lateral surface 1a, a maintenance opening 11a intended for maintenance of the heat exchanger 10 is provided. The maintenance opening 11a is closed by a heat-exchanger maintenance panel 11. The heat-exchanger maintenance panel 11 is in contact with the end surface of the heat exchanger 10 to partition off the maintenance opening on the interior-side lateral surface 1a from the pre-heat-exchanger supply air passage 6a, the post-heat-exchanger supply air passage 6b, the pre-heat-exchanger discharge air passage 7a, and the post-heat-exchanger discharge air passage 7b in order to prevent leakage of air. On the interior-side lateral surface 1a, a control box 42 is provided in which a control circuit is accommodated.

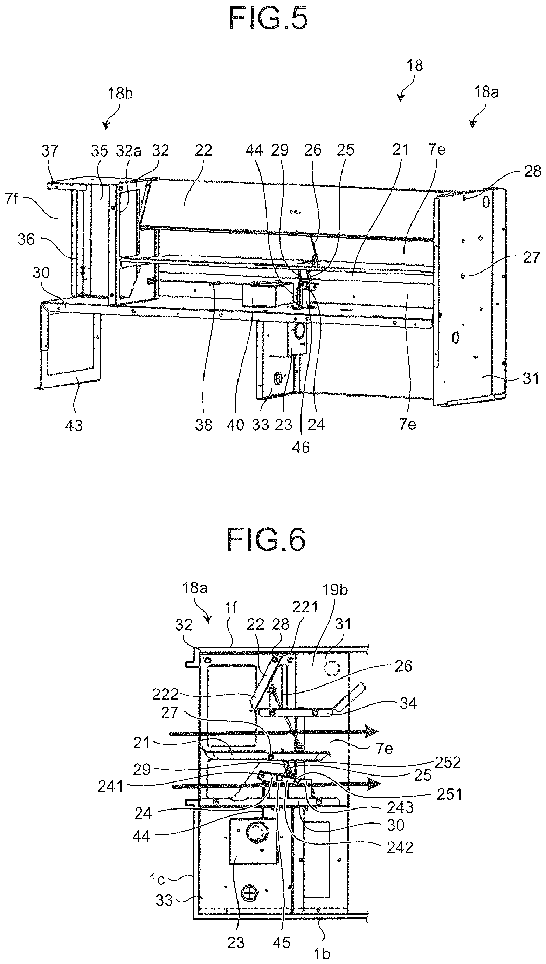

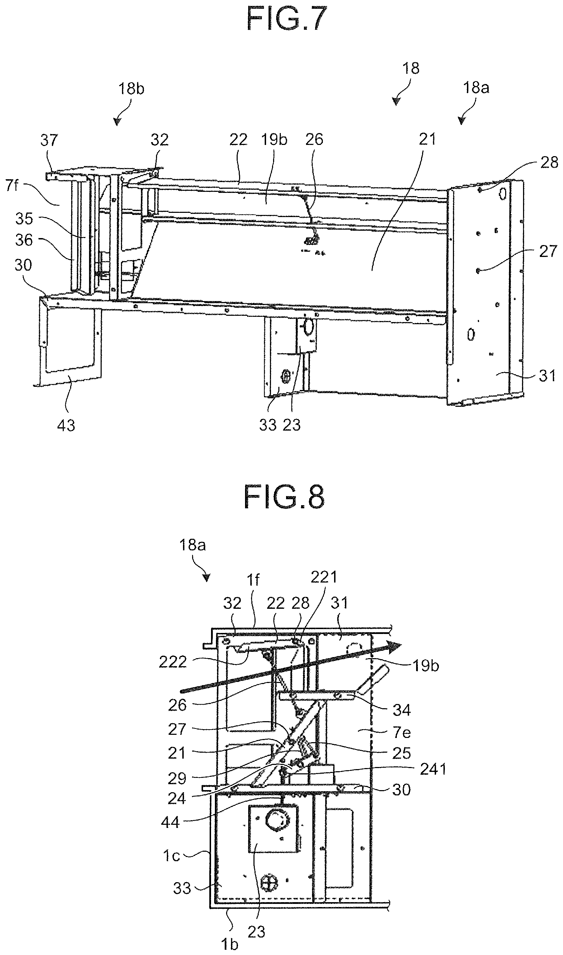

FIG. 5 is a perspective view of the air passage switching device included in the heat exchange ventilation device according to the present embodiment during heat exchange ventilation. FIG. 6 is a side view of the air passage switching device included in the heat exchange ventilation device according to the present embodiment during heat exchange ventilation. FIG. 7 is a perspective view of the air passage switching device included in the heat exchange ventilation device according to the present embodiment during normal ventilation. FIG. 8 is a side view of the air passage switching device included in the heat exchange ventilation device according to the present embodiment during normal ventilation. FIGS. 6 and 8 illustrate a first side plate 31 in a transparent manner.

The air passage switching device 18 includes a first air-passage switching unit 18a including a first air-passage switching plate 21 that opens and closes a first discharge air passage 7e, and a second air-passage switching plate 22 that opens and closes a first bypass air passage 19b, and a second air-passage switching unit 18b including a third air-passage switching plate 35 that opens and closes a second discharge air passage 7f. The first air-passage switching plate 21 and the second air-passage switching plate 22 are first air-passage switching members. The third air-passage switching plate 35 is a second air-passage switching member. As described later, the first air-passage switching plate 21 and the second air-passage switching plate 22 that are the first air-passage switching members rotationally move in conjunction with each other. The first air-passage switching unit 18a and the second air-passage switching unit 18b use different power sources. The power source of the first air-passage switching unit 18a is a first geared motor 23 and the power source of the second air-passage switching unit 18b is a second geared motor 40. The first geared motor 23 is mounted on a geared-motor fixing plate 33.

The first air-passage switching plate 21 is supported by the first side plate 31 and a second side plate 32 to be rotatable about a first air-passage switching plate shaft 27 that serves as a pivot. A side-plate hole 32a is provided on the second side plate 32. The second air-passage switching plate 22 is supported by the first side plate 31 and the second side plate 32 to be rotatable about a second air-passage switching plate shaft 28 that is provided at one end portion 221 of the second air-passage switching plate 22 to serve as a pivot. An air-passage partition component 34 extends across the first side plate 31 and the second side plate 32. An air-passage switching base component 30 extends across the first side plate 31 and a third side plate 43. The first air-passage switching plate shaft 27 and the second air-passage switching plate shaft 28 extend parallel to the air-passage switching base component 30. In the air passage switching device 18, the air-passage switching base component 30 is disposed to extend parallel to the bottom surface 1b of the casing 1. Thus, the first air-passage switching plate shaft 27 and the second air-passage switching plate shaft 28 extend parallel to the bottom surface 1b of the casing 1. That is, each of the first air-passage switching plate 21 and the second air-passage switching plate 22 has a rotational shaft extending horizontally to the bottom surface 1b of the casing 1.

The first discharge air passage 7e is a passage between the air-passage partition component 34 and the air-passage switching base component 30. A first air-passage switching plate spring 29 is connected to the first air-passage switching plate 21.

A wire 44 is connected to the first geared motor 23 that drives the first air-passage switching unit 18a. The wire 44 is also connected to one end portion 241 of a first rod 24. The first rod 24 is pivotally supported by a column portion 46 in a rotatable manner about a shaft 45 provided at an intermediate portion 242 of the first rod 24. One end portion 251 of a second rod 25 is connected to the first rod 24 at a position closer to the other end portion 243 with respect to the shaft 45. The other end portion 252 of the second rod 25 is connected to the first air-passage switching plate 21.

During heat exchange ventilation, the air-passage switching plate 22 connected to a third rod 26 rotates with the other end portion 222 moving downward under its own weight. The other end portion 222 is therefore brought into contact with the air-passage partition component 34. Accordingly, the first air-passage switching plate 21 is maintained in a parallel orientation to the air-passage switching base component 30 through the third rod 26. Due to the above operation, the first air-passage switching unit 18a is brought into a state in which the first discharge air passage 7e is not blocked by the first air-passage switching plate 21, and in which the first bypass air passage 19b is blocked by the second air-passage switching plate 22.

During normal ventilation, the first geared motor 23 winds the wire 44 to pull down one end portion 241 of the first rod 24. The first rod 24 rotates in such a manner that one end portion 241 moves downward. The second rod 25, connected to the first rod 24 at a position closer to the other end portion 243, brings the first air-passage switching plate 21 into contact with the air-passage switching base component 30 and with the air-passage partition component 34. Upon the rotation of the first air-passage switching plate 21, the second air-passage switching plate 22 is lifted by the third rod 26, then rotates about the second air-passage switching plate shaft 28, and is therefore oriented parallel to the air-passage partition component 34. Due to the above operation, the first air-passage switching unit 18a is brought into a state in which the first discharge air passage 7e is blocked by the first air-passage switching plate 21, and in which the first bypass air passage 19b is not blocked by the second air-passage switching plate 22.

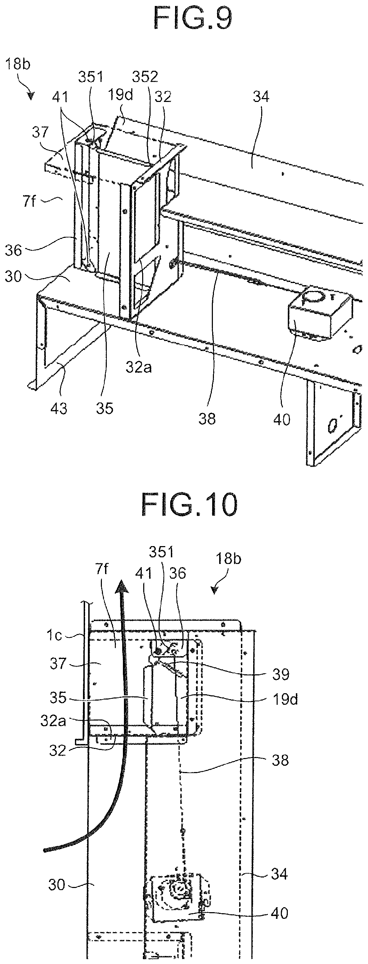

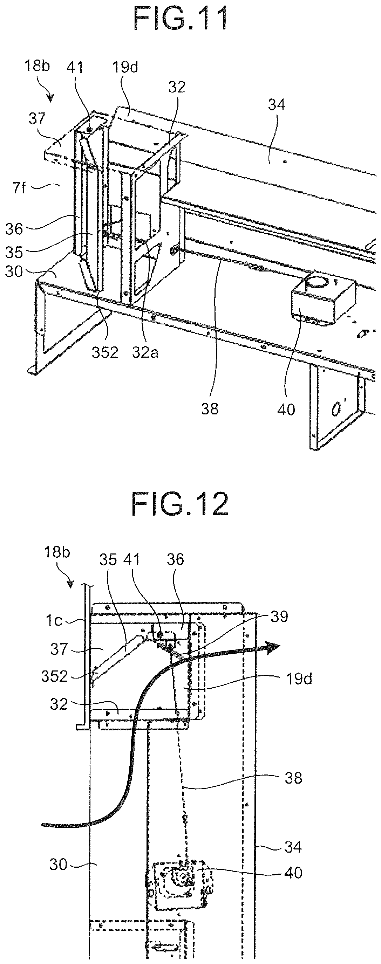

FIG. 9 is a perspective view of the second air-passage switching unit of the air passage switching device included in the heat exchange ventilation device according to the present embodiment during heat exchange ventilation. FIG. 10 is a side view of the second air-passage switching unit of the air passage switching device included in the heat exchange ventilation device according to the present embodiment during heat exchange ventilation. FIG. 11 is a perspective view of the second air-passage switching unit of the air passage switching device included in the heat exchange ventilation device according to the present embodiment during normal ventilation. FIG. 12 is a side view of the second air-passage switching unit of the air passage switching device included in the heat exchange ventilation device according to the present embodiment during normal ventilation. FIGS. 9 to 12 illustrate a third air-passage switching plate top-surface component 37 in a transparent manner.

The third air-passage switching plate 35 is located rotatably about a third air-passage switching plate shaft 41 that serves as a pivot and that extends perpendicularly to the air-passage switching base component 30. That is, the third air-passage switching plate 35 has a rotational shaft extending perpendicularly to the bottom surface 1b of the casing 1. The third air-passage switching plate 35 is rotatably supported about the switching plate 41 by a third air-passage switching-plate holding component 36. A third air-passage switching plate rod 38 is connected to one end portion 351 of the third air-passage switching plate 35. The third air-passage switching plate rod 38 connects the second geared motor 40 to the third air-passage switching plate 35. A third air-passage switching plate spring 39 is connected to the third air-passage switching plate 35. The third air-passage switching plate top-surface component 37 is located on the upper side of the third air-passage switching plate 35, and covers the second discharge air passage 7f from above.

During heat exchange ventilation, the third air-passage switching plate 35 is oriented parallel to the inlet-side lateral surface 1c of the casing 1 by an elastic force of the third air-passage switching plate spring 39. Due to this orientation, the second discharge air passage 7f is opened, which extends from the side-plate hole 32a provided on the second side plate 32 toward the stacking direction of the heat exchanger 10. The third air-passage switching plate 35 oriented in parallel to the inlet-side lateral surface 1c of the casing 1 closes a second bypass air passage 19d. Thus, indoor air having flowed from the interior-side inlet port 4 into the casing 1 passes through the side-plate hole 32a for the second discharge air passage 7f, which is provided on the second side plate 32. This indoor air passes between the inlet-side lateral surface 1c and the third air-passage switching plate 35, and thereafter flows through the pre-heat-exchanger discharge air passage 7a.

During normal ventilation, the second geared motor 40 drives the third air-passage switching plate rod 38 to pull one end portion 351 of the third air-passage switching plate 35 so as to bring the other end portion 352 of the third air-passage switching plate 35 into contact with the inlet-side lateral surface 1c of the casing 1. Due to this operation, the second discharge air passage 7f, which extends from the side-plate hole 32a provided on the second side plate 32 toward the stacking direction of the heat exchanger 10 is blocked. The other end portion 352 of the third air-passage switching plate 35 moves away from the second side plate 32, and thereby the second bypass air passage 19d is opened. Thus, indoor air having flowed from the interior-side inlet port 4 into the casing 1 passes through the side-plate hole 32a for the second discharge air passage 7f, which is provided on the second side plate 32. This indoor air passes through the second bypass air passage 19d, and thereafter flows through the bypass air passage 19a above the heat exchanger.

Due to the above operation, the first air-passage switching unit 18a directs air, flowing directly to the heat exchanger 10, to the discharge air passage 7 or to the bypass air passage 19. The second air-passage switching unit 18b directs air, flowing in parallel to the stacking direction of the heat exchanger 10, to the discharge air passage 7 or to the bypass air passage 19. The discharge air passage 7 is branched into the first discharge air passage 7e and the second discharge air passage 7f by the first air-passage switching unit 18a and the second air-passage switching unit 18b in the casing 1. Thereafter, the first and second discharge air passages 7e and 7f join together at the pre-heat-exchanger discharge air passage 7a. The bypass air passage 19 is branched into the first bypass air passage 19b and the second bypass air passage 19d by the first air-passage switching unit 18a and the second air-passage switching unit 18b in the casing 1. Thereafter, the first and second bypass air passages 19b and 19d join together at the bypass air passage 19a above the heat exchanger.

The air passage switching device 18 of the heat exchange ventilation device according to the present embodiment includes the first air-passage switching unit 18a and the second air-passage switching unit 18b. The first air-passage switching unit 18a includes the first air-passage switching plate 21 having the first air-passage switching plate shaft 27, and the second air-passage switching plate 22 having the second air-passage switching plate shaft 28, where the first and second air-passage switching plate shafts 27 and 28 serve as a rotational shaft extending in a direction parallel to the bottom surface 1b of the heat exchange ventilation device 50. The second air-passage switching unit 18b includes the third air-passage switching plate 35 having the third air-passage switching plate shaft 41 that serves as a rotational shaft extending in a direction perpendicular to the bottom surface 1b of the heat exchange ventilation device 50. The air passage switching device 18 switches between the discharge air passage 7 and the bypass air passage 19 to which air drawn into the casing 1 from a room is directed, in accordance with the rotational position of the first air-passage switching plate 21, the second air-passage switching plate 22, and the third air-passage switching plate 35. Thus, the air passage switching device 18 is applicable to the heat exchange ventilation device 50 with a rectangular duct at the interior-side inlet port 4, and can be simultaneously prevented from increasing in the size and from having a more complicated structure.

### Reference Signs List

1 casing, 1a interior-side lateral surface, 1b bottom surface, 1c inlet-side lateral surface, 1d outlet-side lateral surface, 1e exterior-side lateral surface, 1f top surface, 2 exterior-side inlet port, 3 interior-side outlet port, 4 interior-side inlet port, 5 exterior-side outlet port, 6 supply air passage, 6a pre-heat-exchanger supply air passage, 6b post-heat-exchanger supply air passage, 6c pre-supply-air-blower-unit supply air passage, 6d post supply-air-blower-unit supply air passage, 7 discharge air passage, 7a pre-heat-exchanger discharge air passage, 7b post-heat-exchanger discharge air passage, 7c pre discharge-air-blower-unit discharge air passage, 7d post-discharge-air-blower-unit discharge air passage, 7e first discharge air passage, 7f second discharge air passage, 8 supply-air blower unit, 9 discharge-air blower unit, 10 heat exchanger, 11 heat-exchanger maintenance panel, 11a maintenance opening, 12, 34 air-passage partition component, 18 air passage switching device, 18a first air-passage switching unit, 18b second air-passage switching unit, 19 bypass air passage, 19a bypass air passage above the heat exchanger, 19b first bypass air passage, 19d second bypass air passage, 20 bypass air-passage partition component, 21 first air-passage switching plate, 22 second air-passage switching plate, 23 first geared motor, 24 first rod, 25 second rod, 26 third rod, 27 first air-passage switching plate shaft, 28 second air-passage switching plate shaft, 29 first air-passage switching plate spring, 30 air-passage switching base component, 31 first side plate, 32 second side plate, 32a side-plate hole, 33 geared-motor fixing plate, 35 third air-passage switching plate, 36 third air-passage switching-plate holding component, 37 third air-passage switching plate top-surface component, 38 third air-passage switching plate rod, 39 third air-passage switching plate spring, 40 second geared motor, 41 third air-passage switching plate shaft, 42 control box, 43 third side plate, 44 wire, 45 shaft, 46 column portion, 50 heat exchange ventilation device, 221, 241, 251, 351 one end portion, 222, 243, 252, 352 other end portion, 242 intermediate portion.

## Claims

1. A heat exchange ventilation device (50) comprising
a casing (1) including a discharge air passage (7) branched into a first discharge air passage (7e) and a second discharge air passage (7f), a supply air passage (6), and a heat exchanger (10) disposed between the supply air passage (6) and the discharge air passage (7), and a bypass air passage (19) for bypassing the heat exchanger (10), said bypass air passage (19) being branched into a first bypass air passage (19b) and a second bypass air passage (19d), wherein the first bypass air passage (19b) is branching off from the first discharge air passage (7e) and the second bypass air passage (19d) is branching off from the second discharge air passage (7f), and an air passage switching device (18) to switch between the discharge air passage (7) and the bypass air passage (19) in the heat exchange ventilation device (50) through which airflow passes,
the air passage switching device (18) comprising:
a first air-passage switching unit (18a) including a first air passage switching plate (21) that opens and closes the first discharge air passage (7e) and a second air passage switching plate (22) that opens and closes the first bypass air passage (19b) as first air-passage switching members each of which has a rotational shaft (27, 28) extending in a direction parallel to a bottom surface (1b) of the heat exchange ventilation device (50) and the first air passage switching plate (21) and the second air passage switching plate (22) rotationally move in conjunction with each other, and
a second air-passage switching unit (18b) including a third air air-passage switching plate (35) that opens and closes the second discharge air passage (7f) as a second air-passage switching member (35) having a rotational shaft (41) extending in a direction perpendicular to the bottom surface (1b) of the heat exchange ventilation device (50) and the third air-passage switching plate (35) rotates independently from the first and second air-passage switching plates (21, 22) and when the third air passage switching plate (35) opens the second discharge air passage (7f) the second bypass air passage (19d) is closed and when the third air passage switching plate (35) closes the second discharge air passage (7f) the second bypass air passage (19d) is opened , wherein
the air passage switching device (18) switches between the discharge air passage (7) and the bypass air passage (19) to which air drawn into the device from a room is directed, in accordance with a rotational position of the first, second and third air-passage switching plates (21, 22, 35).

2. The heat exchange ventilation device (50) according to claim 1, wherein
outside air is supplied to a room through the supply air passage (6) and via the heat exchanger (10), indoor air is discharged to outside through the discharge air passage (7) and via the heat exchanger (10), and indoor air bypasses the heat exchanger (10) and is discharged to outside through the bypass air passage (19).

3. The heat exchange ventilation device (50) according to claim 2, wherein
the first air-passage switching unit (18a) directs air, flowing directly to the heat exchanger (10), to the discharge air passage (7) or to the bypass air passage (19), and the second air-passage switching unit (18b) directs air, flowing in parallel to a stacking direction of the heat exchanger (10), to the discharge air passage (7) or to the bypass air passage (19).

4. The heat exchange ventilation device (50) according to claim 3, wherein
the discharge air passage (7) is branched into branch passages (7e, 7f) by the first air-passage switching unit (18a) and the second air-passage switching unit (18b) in the casing (1), and then the branch passages (7e, 7f) join together.

## Patentansprüche

1. Wärmeaustausch-Belüftungseinrichtung (50), umfassend ein Gehäuse (1), aufweisend einen Abluftdurchlass (7), der in einen ersten Abluftdurchlass (7e) und einen zweiten Abluftdurchlass (7f) verzweigt ist, einen Zuluftdurchlass (6) und einen Wärmetauscher (10), der zwischen dem Zuluftdurchlass (6) und dem Abluftdurchlass (7) angeordnet ist, und
einen Bypass-Luftdurchlass (19) zum Umgehen des Wärmetauschers (10), wobei der Bypass-Luftdurchlass (19) in einen ersten Bypass-Luftdurchlass (19b) und einen zweiten Bypass-Luftdurchlass (19d) verzweigt ist, wobei der erste Bypass-Luftdurchlass (19b) von dem ersten Abluftdurchlass (7e) abzweigt und der zweite Bypass-Luftdurchlass (19d) von dem zweiten Abluftdurchlass (7f) abzweigt, und
eine Luftdurchlasss-Schalteinrichtung (18) zum Schalten zwischen dem Abluftdurchlass (7) und dem Bypass-Luftdurchlass (19) in der Wärmetausch-Belüftungseinrichtung (50), die der Luftstrom passiert, wobei die Luftdurchlasss-Schalteinrichtung (18) umfasst:
eine erste Luftdurchlass-Schalteinheit (18a), aufweisend eine erste Luftdurchlass-Schaltplatte (21), die den ersten Abluftdurchlass (7e) öffnet und schließt, und eine zweite Luftdurchlass-Schaltplatte (22), die den ersten Bypass-Luftdurchlass (19b) öffnet und schließt, als erste Luftdurchlass-Schaltelemente, wobei jede davon eine Drehwelle (27, 28) aufweist, die sich in einer Richtung parallel zu einer Bodenoberfläche (1b) der Wärmeaustausch-Belüftungseinrichtung (50) erstreckt, und die erste Luftdurchlass-Schaltplatte (21) und die zweite Luftdurchlass-Schaltplatte (22) sich in Verbindung miteinander drehend bewegen, und
eine zweite Luftdurchlass-Schalteinheit (18b), aufweisend eine dritte Luftdurchlass-Schaltplatte (35), die den zweiten Abluftdurchlass (7f) öffnet und schließt, als ein zweites Luftdurchlass-Schaltelement (35), aufweisend eine Drehwelle (41), die sich in einer Richtung senkrecht zur Bodenoberfläche (1b) der Wärmeaustausch-Belüftungseinrichtung (50) erstreckt, und die dritte Luftdurchlass-Schaltplatte (35) sich unabhängig von der ersten und zweiten Luftdurchlass-Schaltplatte (21, 22) dreht, und wenn die dritte Luftdurchlass-Schaltplatte (35) den zweiten Abluftdurchlass (7f) öffnet, der zweite Bypass-Luftdurchlass (19d) geschlossen ist, und wenn die dritte Luftdurchlass-Schaltplatte (35) den zweiten Abluftdurchlass (7f) schließt, der zweite Bypass-Luftdurchlass (19d) geöffnet ist, wobei
die Luftdurchlass-Schalteinrichtung (18) zwischen dem Abluftdurchlass (7) und dem Bypass-Luftdurchlass (19), zu dem die aus einem Raum in die Einrichtung angesaugte Luft geleitet wird, gemäß einer Drehposition der ersten, zweiten und dritten Luftdurchlass-Schaltplatte (21, 22, 35) schaltet.

2. Wärmeaustausch-Belüftungseinrichtung (50) nach Anspruch 1, wobei
Außenluft in einem Raum durch den Zuluftdurchlass (6) und über den Wärmetauscher (10) zugeführt wird, Innenluft durch den Abluftdurchlass (7) und über den Wärmetauscher (10) nach außen abgegeben wird, und Innenluft den Wärmetauscher (10) umgeht und über den Bypass-Luftdurchlass (19) nach außen abgegeben wird.

3. Wärmeaustausch-Belüftungseinrichtung (50) nach Anspruch 2, wobei
die erste Luftdurchlass-Schalteinheit (18a) Luft, die direkt zu dem Wärmetauscher (10) strömt, zu dem Abluftdurchlass (7) oder zu dem Bypass-Luftdurchlass (19) leitet, und die zweite Luftdurchlass-Schalteinheit (18b) Luft, die parallel zu einer Stapelrichtung des Wärmetauschers (10) strömt, zu dem Abluftdurchlass (7) oder zu dem Bypass-Luftdurchlass (19) leitet.

4. Wärmeaustausch-Belüftungseinrichtung (50) nach Anspruch 3, wobei
der Abluftdurchlass (7) durch die erste Luftdurchlass-Schalteinheit (18a) und die zweite Luftdurchlass-Schalteinheit (18b) in dem Gehäuse (1) in Zweigdurchlass (7e, 7f) verzweigt wird und die Zweigdurchlässe (7e, 7f) dann zusammenlaufen.

## Revendications

1. Dispositif de ventilation à échange de chaleur (50) comprenant un boîtier (1) incluant un passage d'air de décharge (7) ramifié en un premier passage d'air de décharge (7e) et un second passage d'air de décharge (7f), un passage d'air d'alimentation (6), et un échangeur de chaleur (10) disposé entre le passage d'air d'alimentation (6) et le passage d'air de décharge (7), et
un passage d'air de dérivation (19) pour contourner l'échangeur de chaleur (10), ledit passage d'air de dérivation (19) étant ramifié en un premier passage d'air de dérivation (19b) et un second passage d'air de dérivation (19d), dans lequel le premier passage d'air de dérivation (19b) est ramifié à partir du premier passage d'air de décharge (7e) et le second passage d'air de dérivation (19d) est ramifié à partir du second passage d'air de décharge (7f), et
un dispositif de commutation de passage d'air (18) pour commuter entre le passage d'air de décharge (7) et le passage d'air de dérivation (19) dans le dispositif de ventilation à échange thermique (50) à travers lequel passe le flux d'air, le dispositif de commutation du passage d'air (18) comprenant :
une première unité de commutation de passage d'air (18a) incluant une première plaque de commutation de passage d'air (21) qui ouvre et ferme le premier passage d'air de décharge (7e) et une deuxième plaque de commutation de passage d'air (22) qui ouvre et ferme le premier passage d'air de dérivation (19b) en tant que premiers éléments de commutation de passage d'air, chacun d'entre eux présentant un arbre rotatif (27, 28) s'étendant dans une direction parallèle à une surface inférieure (1b) du dispositif de ventilation à échange de chaleur (50) et la première plaque de commutation de passage d'air (21) et la deuxième plaque de commutation de passage d'air (22) se déplacent en rotation conjointement l'une avec l'autre, et
une seconde unité de commutation de passage d'air (18b) comprenant une troisième plaque de commutation de passage d'air (35) qui ouvre et ferme le second passage d'air de décharge (7f) en tant que second élément de commutation de passage d'air (35) doté d'un arbre rotatif (41) s'étendant dans une direction perpendiculaire à la surface inférieure (1b) du dispositif de ventilation à échange de chaleur (50) et la troisième plaque de commutation de passage d'air (35) tourne indépendamment des première et deuxième plaques de commutation de passage d'air (21, 22) et lorsque la troisième plaque de commutation de passage d'air (35) ouvre le second passage d'air de décharge (7f), le second passage d'air de dérivation (19d) est fermé et lorsque la troisième plaque de commutation de passage d'air (35) ferme le second passage d'air de décharge (7f), le second passage d'air de dérivation (19d) est ouvert, dans lequel
le dispositif de commutation de passage d'air (18) commute entre le passage d'air de décharge (7) et le passage d'air de dérivation (19) vers lequel est dirigé l'air aspiré dans le dispositif depuis une pièce, en fonction d'une position de rotation des première, deuxième et troisième plaques de commutation de passage d'air (21, 22, 35).

2. Dispositif de ventilation à échange de chaleur (50) selon la revendication 1, dans lequel
l'air extérieur est fourni à une pièce par le passage d'air d'alimentation (6) et via l'échangeur de chaleur (10), l'air intérieur est évacué vers l'extérieur par le passage d'air d'évacuation (7) et via l'échangeur de chaleur (10), et l'air intérieur contourne l'échangeur de chaleur (10) et est évacué vers l'extérieur par le passage d'air de dérivation (19).

3. Dispositif de ventilation à échange de chaleur (50) selon la revendication 2, dans lequel
la première unité de commutation de passage d'air (18a) dirige l'air, s'écoulant directement vers l'échangeur de chaleur (10), vers le passage d'air de décharge (7) ou vers le passage d'air de dérivation (19), et la seconde unité de commutation de passage d'air (18b) dirige l'air, s'écoulant parallèlement à une direction d'empilage de l'échangeur de chaleur (10), vers le passage d'air de décharge (7) ou vers le passage d'air de dérivation (19).

4. Dispositif de ventilation à échange de chaleur (50) selon la revendication 3, dans lequel
le passage d'air de décharge (7) est ramifié en passages de dérivation (7e, 7f) par la première unité de commutation de passage d'air (18a) et la seconde unité de commutation de passage d'air (18b) dans le boîtier (1), puis les passages de dérivation (7e, 7f) se rejoignent.
